# EUROPEAN PATENT SPECIFICATION

(11) **EP 3 985 447 B1**
(45) Date of publication and mention of the grant of the patent: **25.11.2026**
(21) Application number: 20202613.4
(22) Date of filing: 19.10.2020
(51) Int. Cl.: G04B 17/28

(54) **ADJUSTABLE LEVER OF A TOURBILLON MECHANISM AND A METHOD OF ADJUSTMENT**
VERSTELLBARER HEBEL EINES TOURBILLONMECHANISMUS UND VERFAHREN ZUR EINSTELLUNG
LEVIER RÉGLABLE D'UN MÉCANISME DE TOURBILLON ET PROCÉDÉ DE RÉGLAGE

(43) Date of publication of application: 20.04.2022
(73) Proprietor: Glashütter Uhrenbetrieb GmbH, 01768 Glashütte/Sachsen (DE)
(72) Inventor: BRAUN, Tony, 01809 Müglitztal (DE)
(74) Representative: ICB SA

(56) References cited:
- US-A1- 2004 062 149

## Description

### Technical field

The present invention and disclosure relates to a movement of a watch, e.g. of a wristwatch comprising a tourbillon unit and further comprising a balance stop mechanism. In particular, it relates to an adjustable lever of a tourbillon mechanism and a method of adjustment.

### State of the art

Some timepieces have a setting device for setting the hands of the timepiece and a circular balance wheel, which can be pivoted about a pivot pin.

In some cases, the balance wheel is arrested by a spring arm, which is pivoted for abutment against the balance wheel, and, following completion of the operation of setting the hands, the act of pivoting the spring arm away from the balance wheel releases the latter again from its arrested state.

It is not possible to use such an arresting action of the balance wheel in timepieces with a tourbillon, since the brake force may be to strong or to soft. Therefore there is a need to provide a tourbillon which easily allows the pivoting movement of the balance wheel to be blocked when a setting device of the timepiece is actuated without to be too loose or too strong.

Indeed, if the force applied on balance wheel is too loose, the tourbillon may move further and damage the mechanism and if the force applied is too strong, the tourbillon may be displaced.

It is know from US2004/0062149 a timepiece comprising a tourbillon and a mechanism which allows the pivoting movement of the balance wheel to be blocked when a setting device of the timepiece is actuated.

### Summary of the invention

It is a particular aim of the present invention and disclosure to provide an adjustable lever of a tourbillon mechanism for stopping at least one tourbillon unit; as defined by claim 1 of the patent.

Thus, this configuration allows adjusting the brake force of said at least one brake element via said adjustable lever. Moreover, this configuration allows adjusting the brake force of said at least one brake element by moving said at least one adjustment member and preferably by screwing said at least one first eccentric screw

According to an embodiment, said adjustable lever comprises at least one axis of rotation between said at least one first member and said at least one second member, on said at least one first member and/or on said at least one second member; said at least one first member and/or said at least one second member is or are mobile in rotation around said at least one axis of rotation.

Thus, this configuration allows adjusting the brake force of said at least one brake element when said adjustable lever rotates around said at least one axis of rotation.

According to an embodiment, said adjustable lever comprises at least one first hole and at least one fixation element configured to cooperate with said at least one first hole and to settle said at least one second member with respect to said at least one first member in an adjusted position between said first position and said second position and/or to settle said at least one first member with respect to said at least one second member in an adjusted position between said first position and said second position.

Thus, this configuration allows adjusting the brake force of said at least one brake element and settling said adjusted position.

According to an embodiment, said at least one first hole comprises a first extremity and a second extremity; in said first position, said at least one adjustment member is closer from said first extremity than said second extremity and in said second position, said at least one adjustment member is closer from said second extremity than said first extremity.

According to an embodiment, said at least one first hole is disposed on said at least one adjustment member, and preferably said at least one first hole has an oblong shape.

According to an embodiment, at least one fixation element comprises at least one second screw and at least one second hole.

Thus, one of those configurations allow adjusting the brake force of said at least one brake element and settling said adjusted position.

According to an embodiment, said at least one second member comprises a receiving member, preferably a receiving slot, configured to receive said at least one adjustment member, preferably said first head.

According to an embodiment, said receiving member, preferably a receiving slot, is configured to receive said at least one adjustment member, preferably said first head.

According to an embodiment, said receiving member, preferably a receiving slot, is an open-end wrench, an open-ended spanner, U-shaped opening wrench and/or an at least one adjustment member corresponding plug, preferably a first head corresponding plug.

Thus, one of those configurations allow adjusting the brake force of said at least one brake element by adjusting a position of said at least one first member and/or of said at least one second member between a first position and a second position.

According to an embodiment, said adjustable lever is a rack.

Thus, this configuration allows adjusting the brake force of said at least one brake element via said adjustable lever.

The present invention relates to at least one tourbillon unit comprising at least one adjustable lever according to an aspect of the invention.

Thus, this configuration allows adjusting the brake force of said at least one brake element of said At least one tourbillon unit via said adjustable lever.

The present invention relates as well to a method of adjustment for adjusting a force on at least one brake element of a tourbillon mechanism according to claim 12.

Thus, this method of adjustment allows adjusting the brake force of said at least one brake element via said adjustable lever.

According to an embodiment, said method of adjustment comprises a fixing said at least one first member to said at least one second member and/or said at least one second member to said at least one first member after said Adjustment of a position.

Thus, this method of adjustment allows adjusting the brake force of said at least one brake element and fixing said position between a first position and a second position.

### Brief description of the drawings

The foregoing and other purposes, features, aspects and advantages of the invention will become apparent from the following detailed description of the embodiments, given by way of illustration and not limitation with reference to the accompanying drawings, in which:
- figures 1 and 2 illustrate movement comprises at least one tourbillon block **271** and at least one tourbillon unit **200**
- figure 3 represents an exploded of at least one adjustable lever **100** according to an embodiment;
- figure 4 illustrates said at least one adjustable lever **100** actuated via at least one winding-mechanism **290** according to an embodiment; and,

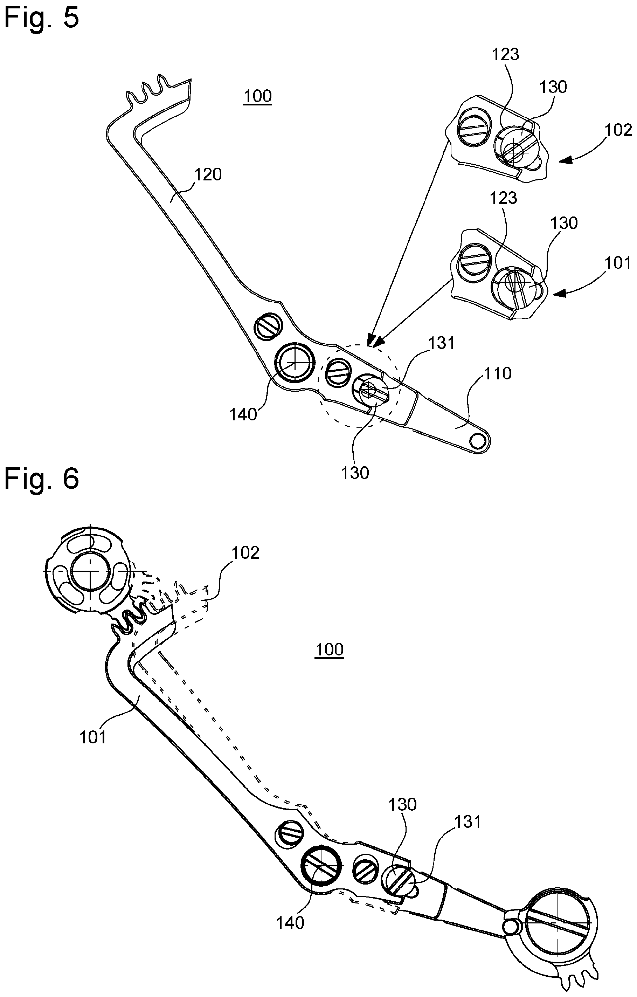

- figures 5 and 6 represent at least one adjustment member **130** adjusting at least one second member **120** with respect to at least one first member **110** between a first position **101** and a second position **102** according to an embodiment.

### Description of the invention

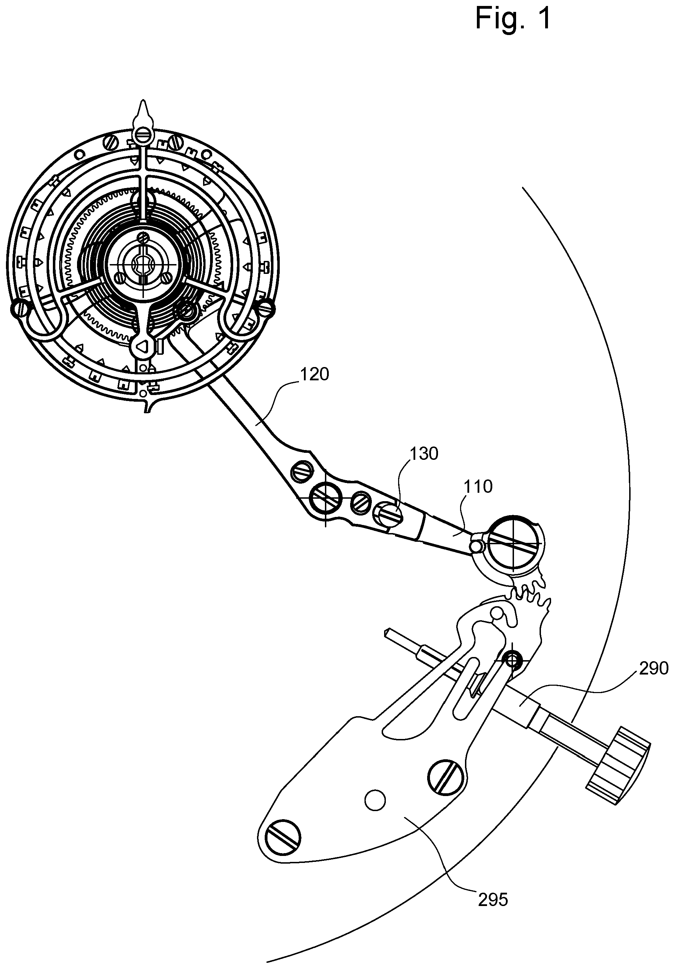

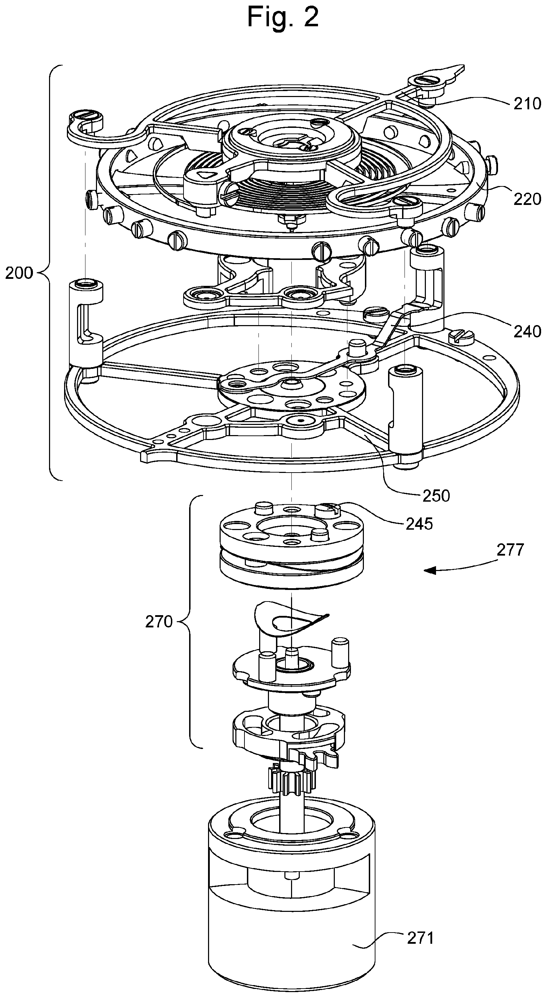

In Figs. 1 and 2 a movement is illustrated. The movement comprises at least one tourbillon block **271** and at least one tourbillon unit **200.** Said at least one tourbillon unit **200** comprises at least one balance wheel **220** rotationally mounted on at least one carriage **250.** Said at least one balance wheel **220** may be in engagement with an escape wheel (not represented). Said at least one carriage **250** is further provided with at least one seconds hand **210** configured to illustrate the seconds on a dial for example.

There is further provided at least one clutch **277** rotationally coupled or rotationally fixed to said at least one carriage **250,** and at least one transfer element **245.** Said at least one transfer element **245** is axially displaceable or guided in or by at least one clutch **277.**

When said at least one clutch **277** is actuated, the respective movement of said at least one clutch **277** is transferred to said at least one transfer element **245.**

In this way, said at least one transfer element **245** is configured to urge against at least one brake element **240** thus leading to an axial displacement or axial deformation of said at least one brake element **240.** In this way, said at least one brake element **240** which is arranged on said at least one carriage **250** is axially displaceable or deformable from a released position or a released state into a braking position or braking state in which said at least one brake element **240** axially engages with an outer rim of said at least one balance wheel **220.** In this way, said at least one brake element **240** is configured to apply a braking torque or brake force to said at least one balance wheel **220** and to stop or to hinder said at least one balance wheel **220** from rotating or oscillating.

The standstill of at least one at least one tourbillon unit **200** may be critical since the brake force on said at least one at least one tourbillon unit **200** should be measured out such as the balance wheel **220** may be blocked when a setting device of the timepiece may be actuated without to be too loose which may cause

Indeed, if the force applied on balance wheel **220** may be too loose, said at least one tourbillon unit **200** may move further and damage the mechanism and if the force applied may be too strong, said at least one tourbillon unit **200** may be displaced, the mechanism may be damage as well.

In order to achieve the standstill of a balance wheel **220,** said at least one at least one tourbillon unit **200,** according one aspect of the invention, may comprise at least one brake element **240** and at least one adjustable lever **100,** preferably at least one rack **100,** of a tourbillon mechanism for stopping said at least one at least one tourbillon unit **200.**

As depicted in figure 1, said at least one adjustable lever **100** may comprise at least one first member **110** configured to be actuated via at least one pull-out piece **295,** at least one second member **120** configured to actuate said at least one brake element **240,** and at least one adjustment member **130.**

Said at least one adjustment member **130** may be configured to adjust a position of said at least one second member **120** with respect to said at least one first member **110** between a first position **101** and a second position **102** and/or to adjust a position of said at least one first member **110** with respect to said at least one second member **120** between a first position **101** and a second position **102.** Since, said at least one second member **120** may be adjusted with respect to said at least one first member **110** or vice versa, the brake force of said at least one brake element **240** may be measured out.

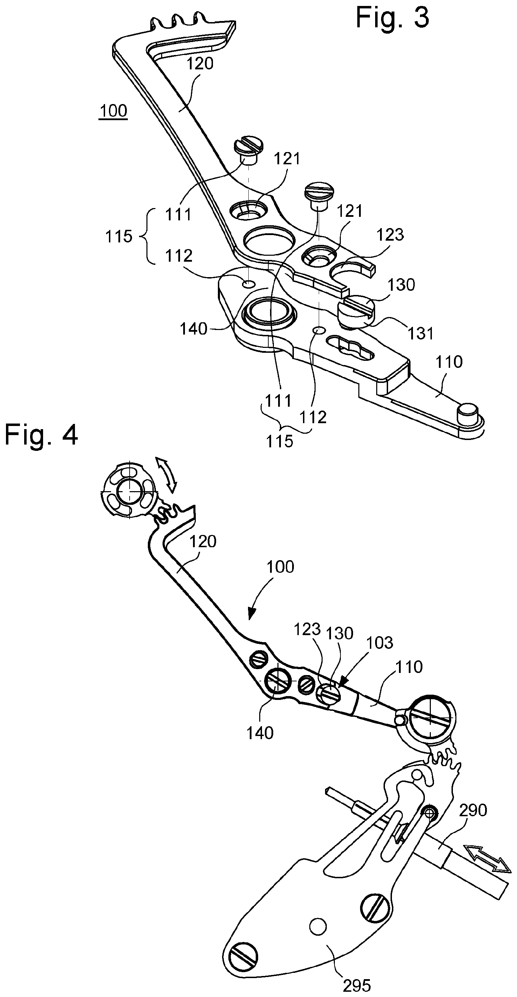

This adjustment may be achieved thanks at least one method of adjustment allowing said adjustment of said force said on at least one brake element **240** of a tourbillon mechanism. Said method of adjustment may comprise an adjustment of a position of said at least one second member **120** with respect to said at least one first member **110** between a first position **101** and a second position **102** and/or of a position of said at least one first member **110** with respect to said at least one second member **120** between a first position **101** and a second position **102** via at least one adjustment member **130,** as illustrated in figures 3 and 4.

In particularly, in order to achieve said adjustment between said at least one second member **120** and said at least one first member **110,** said adjustable lever **100** may comprise at least one axis of rotation **140** between said at least one first member **110** and said at least one second member **120** or said adjustable lever **100** may comprise at least one axis of rotation **140** on said at least one first member **110** and/or on said at least one second member **120,** as depicted in figure 1, and said at least one first member **110** and/or said at least one second member **120** may be mobile in rotation around said at least one axis of rotation **140.**

Thus, this configuration allows adjusting the brake force of said at least one brake element **240** when said adjustable lever **100** rotates around said at least one axis of rotation **140.**

This adjustment is realized through said at least one adjustment member **130,** which is at least one first screw **130,** preferably at least one first eccentric screw **130,** having a first head **131.**

As shown in figures 1 and 3-4, said at least one second member **120** may comprise a receiving member **123,** preferably a receiving slot **123,** configured to receive said at least one adjustment member **130,** preferably said first head **131.** More specifically, said receiving member **123,** preferably said receiving slot **123,** may be an open-end wrench **123,** an open-ended spanner **123,** U-shaped opening wrench **123** and/or an at least one adjustment member corresponding plug **123,** preferably a first head corresponding plug **123.**

As depicted in figure 2, when at least one winding-mechanism **290** is pulled out, said at least one pull-out piece **295** meshes said at least one first member **110.** In order to adjust the brake force of said at least one brake element **240,** said at least one adjustment member **130** may be turned and/or screwed in and/or on said at least one first member **110,** said first head **131** may move in said receiving member **123** and may displace said at least one second member **120** with respect to said at least one first member **110,** for example, until said brake force is measured out, rather said at least one brake element **240** brings to standstill said at least one at least one tourbillon unit **200.**

This two extreme positions, e.g. said first position **101** and said second position **102,** are illustrated in figure 3. Indeed, said first head **131** may have at least one groove oriented at +π/4 for said second position **102** and said at least one groove may be oriented at -π/4 for said first position **101** for example.

When the brake force of said at least one brake element **240** is adjusted, said method of adjustment may comprise a fixing of said at least one first member **110** to said at least one second member **120** and/or said at least one second member **120** to said at least one first member **110.**

Indeed, said adjustable lever **100** may comprise at least one first hole **121** and at least one fixation element **115,** comprising at least one second screw **111** and at least one second hole **112.** Said at least one fixation element **115,** configured to cooperate with said at least one first hole **121,** may be configured to settle said at least one second member **120** with respect to said at least one first member **110** in an adjusted position **103** between said first position **101** and said second position **102** by fixing of said at least one second member **120** to said at least one first member **110.** Alternatively, it may be possible to settle said at least one first member **110** with respect to said at least one second member **120** in an adjusted position **103** between said first position **101** and said second position **102** by fixing said at least one first member **110** to said at least one second member **120.**

In figure 3, said at least one first hole **121,** preferably having an oblong shape, may be disposed on said at least one second member **120** and said at least one first hole **121** may comprise a first extremity **127** and a second extremity **128,** and in said first position **101,** said at least one adjustment member **130** may be closer from said first extremity **127** than said second extremity **128** and in said second position **102,** said at least one adjustment member **130** may be closer from said second extremity **128** than said first extremity **127.**

## Claims

1. Adjustable lever (100) of a tourbillon mechanism for stopping at least one tourbillon unit (200); said adjustable lever (100) comprising at least one:
- first member (110): said at least one first member (110) configured to be actuated;
- second member (120): said at least one second member (120) configured to actuate at least one brake element (240);
- adjustment member (130): said at least one adjustment member (130) configured to adjust a position of said at least one second member (120) with respect to said at least one first member (110) between a first position (101) and a second position (102) and/or to adjust a position of said at least one first member (110) with respect to said at least one second member (120) between a first position (101) and a second position (102), **characterised in that** said at least one adjustment member (130) is at least one first screw (130), preferably at least one first eccentric screw (130); said at least one first screw (130), preferably said at least one first eccentric screw (130) comprises a first head (131).

2. Adjustable lever (100) according to claim 1, comprising at least one axis of rotation (140) between said at least one first member (110) and said at least one second member (120), on said at least one first member (110) and/or on said at least one second member (120); said at least one first member (110) and/or said at least one second member (120) is or are mobile in rotation around said at least one axis of rotation (140).

3. Adjustable lever (100) according to any of the preceding claims, comprising at least one first hole (121) and at least one fixation element (115) configured to cooperate with said at least one first hole (121) and to settle said at least one second member (120) with respect to said at least one first member (110) in an adjusted position (103) between said first position (101) and said second position (102) and/or to settle said at least one first member (110) with respect to said at least one second member (120) in an adjusted position (103) between said first position (101) and said second position (102).

4. Adjustable lever (100) according to claim 3, wherein said at least one first hole (121) comprises a first extremity (127) and a second extremity (128); in said first position (101), said at least one adjustment member (130) is closer from said first extremity (127) than said second extremity (128) and in said second position (102), said at least one adjustment member (130) is closer from said second extremity (128) than said first extremity (127).

5. Adjustable lever (100) according to claim 4, wherein said at least one first hole (121) is disposed on said at least one adjustment member (130), and preferably said at least one first hole (121) has an oblong shape.

6. Adjustable lever (100) according to claim 3, wherein at least one fixation element (115) comprises at least one second screw (111) and at least one second hole (112).

7. Adjustable lever (100) according to any of the preceding claims, wherein said at least one second member (120) comprises a receiving member (123), preferably a receiving slot (123), configured to receive said at least one adjustment member (130), preferably said first head (131).

8. Adjustable lever (100) according to claim 7, wherein said receiving member (123), preferably a receiving slot (123), is configured to receive said at least one adjustment member (130), preferably said first head (131).

9. Adjustable lever (100) according to any of the preceding claims 7 or 8, wherein said receiving member (123), preferably a receiving slot (123), is an open-end wrench (123), an open-ended spanner (123), U-shaped opening wrench (123) and/or an at least one adjustment member corresponding plug (123), preferably a first head corresponding plug (123).

10. Adjustable lever (100) according to any of the preceding claims, wherein said adjustable lever (100) is a rack (100).

11. At least one tourbillon unit (200) comprising at least one adjustable lever (100) according to any preceding claims 1 to 10.

12. Method of adjustment for adjusting a force on at least one brake element (240) of a tourbillon mechanism; said method of adjustment comprising an:
- Adjustment of a position of said at least one second member (120) with respect to said at least one first member (110) between a first position (101) and a second position (102) and/or of a position of said at least one first member (110) with respect to said at least one second member (120) between a first position (101) and a second position (102) via at least one adjustment member (130), **characterised in that** said at least one adjustment member (130) is at least one first screw (130), preferably at least one first eccentric screw (130); said at least one first screw (130), preferably said at least one first eccentric screw (130) comprises a first head (131).

13. Method of adjustment according to claim 12, which comprises a fixing said at least one first member (110) to said at least one second member (120) and/or said at least one second member (120) to said at least one first member (110) after said adjustment of a position.

## Patentansprüche

1. Einstellbarer Hebel (100) eines Tourbillon-Mechanismus zum Anhalten mindestens einer Tourbillon-Einheit (200); wobei der einstellbare Hebel (100) mindestens Folgendes umfasst:
- erstes Element (110): wobei das mindestens eine erste Element (110) eingerichtet ist, betätigt zu werden;
- zweites Element (120): wobei das mindestens eine zweite Element (120) eingerichtet ist, mindestens ein Bremselement (240) zu betätigen;
- Einstellelement (130): wobei das mindestens eine Einstellelement (130) eingerichtet ist, eine Position des mindestens einen zweiten Elements (120) in Bezug auf das mindestens eine erste Element (110) zwischen einer ersten Position (101) und einer zweiten Position (102) einzustellen und/oder eine Position des mindestens einen ersten Elements (110) in Bezug auf das mindestens eine zweite Element (120) zwischen einer ersten Position (101) und einer zweiten Position (102) einzustellen, **dadurch gekennzeichnet, dass**
das mindestens eine Einstellelement (130) mindestens eine erste Schraube (130), vorzugsweise mindestens eine erste Exzenterschraube (130) ist; wobei die mindestens eine erste Schraube (130), vorzugsweise die mindestens eine erste Exzenterschraube (130) einen ersten Kopf (131) aufweist.

2. Einstellbarer Hebel (100) nach Anspruch 1, der mindestens eine Drehachse (140) zwischen dem mindestens einen ersten Element (110) und dem mindestens einen zweiten Element (120) an dem mindestens einen ersten Element (110) und/oder an dem mindestens einen zweiten Element (120) umfasst; wobei das mindestens eine erste Element (110) und/oder das mindestens eine zweite Element (120) um die mindestens eine Drehachse (140) drehbar ist oder sind.

3. Einstellbarer Hebel (100) nach einem der vorhergehenden Ansprüche, der mindestens ein erstes Loch (121) und mindestens ein Fixierelement (115) umfasst, das so eingerichtet ist, dass es mit dem mindestens einen ersten Loch (121) zusammenwirkt und das mindestens eine zweite Element (120) in Bezug auf das mindestens eine erste Element (110) in einer eingestellten Position (103) zwischen der ersten Position (101) und der zweiten Position (102) festlegt und/oder das mindestens eine erste Element (110) in Bezug auf das mindestens eine zweite Element (120) in einer eingestellten Position (103) zwischen der ersten Position (101) und der zweiten Position (102) festlegt.

4. Einstellbarer Hebel (100) nach Anspruch 3, wobei das mindestens eine erste Loch (121) ein erstes Ende (127) und ein zweites Ende (128) aufweist; wobei in der ersten Position (101) das mindestens eine Einstellelement (130) näher an dem ersten Ende (127) als an dem zweiten Ende (128) ist und in der zweiten Position (102) das mindestens eine Einstellelement (130) näher an dem zweiten Ende (128) als an dem ersten Ende (127) ist.

5. Einstellbarer Hebel (100) nach Anspruch 4, wobei das mindestens eine erste Loch (121) an dem mindestens einen Einstellelement (130) angeordnet ist und das mindestens eine erste Loch (121) vorzugsweise eine längliche Form aufweist.

6. Einstellbarer Hebel (100) nach Anspruch 3, wobei mindestens ein Fixierungselement (115) mindestens eine zweite Schraube (111) und mindestens ein zweites Loch (112) umfasst.

7. Einstellbarer Hebel (100) nach einem der vorhergehenden Ansprüche, wobei das mindestens eine zweite Element (120) ein Aufnahmeelement (123), vorzugsweise einen Aufnahmeschlitz (123), umfasst, der eingerichtet ist, das mindestens eine Einstellelement (130), vorzugsweise den ersten Kopf (131), aufzunehmen.

8. Einstellbarer Hebel (100) nach Anspruch 7, wobei das Aufnahmeelement (123), vorzugsweise ein Aufnahmeschlitz (123), eingerichtet ist, das mindestens eine Einstellelement (130), vorzugsweise den ersten Kopf (131), aufzunehmen.

9. Einstellbarer Hebel (100) nach einem der vorhergehenden Ansprüche 7 oder 8, wobei das Aufnahmeelement (123), vorzugsweise ein Aufnahmeschlitz (123), ein Maulschlüssel (123), ein Gabelschlüssel (123), ein U-förmiger Öffnungsschlüssel (123) und/oder ein dem mindestens einen Einstellelement entsprechender Stopfen (123), vorzugsweise ein dem ersten Kopf entsprechender Stopfen (123), ist.

10. Einstellbarer Hebel (100) nach einem der vorhergehenden Ansprüche, wobei der einstellbare Hebel (100) eine Zahnstange (100) ist.

11. Mindestens eine Tourbillon-Einheit (200), umfassend mindestens einen einstellbaren Hebel (100) nach einem der vorhergehenden Ansprüche 1 bis 10.

12. Einstellverfahren zum Einstellen einer Kraft auf mindestens ein Bremselement (240) eines Tourbillon-Mechanismus, wobei das Einstellverfahren Folgendes umfasst:
- Einstellen einer Position des mindestens einen zweiten Elements (120) in Bezug auf das mindestens eine erste Element (110) zwischen einer ersten Position (101) und einer zweiten Position (102) und/oder einer Position des mindestens einen ersten Elements (110) in Bezug auf das mindestens eine zweite Element (120) zwischen einer ersten Position (101) und einer zweiten Position (102) über mindestens ein Einstellelement (130), **dadurch gekennzeichnet, dass** das mindestens eine Einstellelement (130) mindestens eine erste Schraube (130), vorzugsweise mindestens eine erste Exzenterschraube (130), ist; wobei die mindestens eine erste Schraube (130), vorzugsweise die mindestens eine erste Exzenterschraube (130), einen ersten Kopf (131) aufweist.

13. Einstellverfahren nach Anspruch 12, das ein Befestigen des mindestens einen ersten Elements (110) an dem mindestens einen zweiten Element (120) und/oder des mindestens einen zweiten Elements (120) an dem mindestens einen ersten Element (110) nach dem Einstellen einer Position umfasst.

## Revendications

1. Bascule ajustable (100) d'un mécanisme de tourbillon pour arrêter au moins une unité de tourbillon (200) ; ladite bascule ajustable (100) comprenant au moins :
- un premier organe (110) : ledit au moins un premier organe (110) étant configuré pour être actionné ;
- un deuxième organe (120) : ledit au moins un deuxième organe (120) étant configuré pour actionner au moins un élément de frein (240) ;
- un organe d'ajustement (130) : ledit au moins un organe d'ajustement (130) étant configuré pour ajuster une position dudit au moins un deuxième organe (120) par rapport audit au moins un premier organe (110) entre une première position (101) et une deuxième position (102) et/ou pour ajuster une position dudit au moins un premier organe (110) par rapport audit au moins un deuxième organe (120) entre une première position (101) et une deuxième position (102), **caractérisée en ce que**
ledit au moins un organe d'ajustement (130) est au moins une première vis (130), de préférence au moins une première vis excentrique (130) ; ladite au moins une première vis (130), de préférence ladite au moins une première vis excentrique (130) comprend une première tête (131).

2. Bascule ajustable (100) selon la revendication 1, comprenant au moins un axe de rotation (140) entre ledit au moins un premier organe (110) et ledit au moins un deuxième organe (120), sur ledit au moins un premier organe (110) et/ou sur ledit au moins un deuxième organe (120) ; ledit au moins un premier organe (110) et/ou ledit au moins un deuxième organe (120) est ou sont mobiles en rotation autour dudit au moins un axe de rotation (140).

3. Bascule ajustable (100) selon l'une quelconque des revendications précédentes, comprenant au moins un premier trou (121) et au moins un élément de fixation (115) étant configuré pour coopérer avec ledit au moins un premier trou (121) et pour maintenir ledit au moins un deuxième organe (120) par rapport audit au moins un premier organe (110) dans une position ajustée (103) entre ladite première position (101) et ladite deuxième position (102) et/ou pour maintenir ledit au moins un premier organe (110) par rapport audit au moins un deuxième organe (120) dans une position ajustée (103) entre ladite première position (101) et ladite deuxième position (102).

4. Bascule ajustable (100) selon la revendication 3, dans laquelle ledit au moins un premier trou (121) comprend une première extrémité (127) et une deuxième extrémité (128) ; dans ladite première position (101), ledit au moins un organe d'ajustement (130) est plus proche de ladite première extrémité (127) que de ladite deuxième extrémité (128) et, dans ladite deuxième position (102), ledit au moins un organe d'ajustement (130) est plus proche de ladite deuxième extrémité (128) que de ladite première extrémité (127).

5. Bascule ajustable (100) selon la revendication 4, dans laquelle ledit au moins un premier trou (121) est disposé sur ledit au moins un organe d'ajustement (130), et de préférence ledit au moins un premier trou (121) a une forme oblongue.

6. Bascule ajustable (100) selon la revendication 3, dans laquelle au moins un élément de fixation (115) comprend au moins une deuxième vis (111) et au moins un deuxième trou (112).

7. Bascule ajustable (100) selon l'une quelconque des revendications précédentes, dans laquelle ledit au moins un deuxième organe (120) comprend un organe de réception (123), de préférence une fente de réception (123), étant configuré pour recevoir ledit au moins un organe d'ajustement (130), de préférence ladite première tête (131).

8. Bascule ajustable (100) selon la revendication 7, dans laquelle ledit organe de réception (123), de préférence une fente de réception (123), est configuré pour recevoir ledit au moins un organe d'ajustement (130), de préférence ladite première tête (131).

9. Bascule ajustable (100) selon l'une quelconque des revendications précédentes 7 ou 8, dans laquelle ledit organe de réception (123), de préférence une fente de réception (123), est une clé à fourche (123), une clé à extrémité ouverte (123), une clé d'ouverture en forme de U (123) et/ou au moins une prise correspondant à l'organe d'ajustement (123), de préférence une prise correspondant à la première tête (123).

10. Bascule ajustable (100) selon l'une quelconque des revendications précédentes, dans laquelle ladite bascule ajustable (100) est une crémaillère (100).

11. Au moins une unité de tourbillon (200) comprenant au moins une bascule ajustable (100) selon l'une quelconque des revendications précédentes 1 à 10.

12. Procédé d'ajustement pour ajuster une force sur au moins un élément de frein (240) d'un mécanisme de tourbillon ; ledit procédé d'ajustement comprenant :
- un ajustement d'une position dudit au moins un deuxième organe (120) par rapport audit au moins un premier organe (110) entre une première position (101) et une deuxième position (102) et/ou d'une position dudit au moins un premier organe (110) par rapport audit au moins un deuxième organe (120) entre une première position (101) et une deuxième position (102) via au moins un organe d'ajustement (130), **caractérisé en ce que** ledit au moins un organe d'ajustement (130) est au moins une première vis (130), de préférence au moins une première vis excentrique (130) ; ladite au moins une première vis (130), de préférence ladite au moins une première vis excentrique (130) comprend une première tête (131).

13. Procédé d'ajustement selon la revendication 12, comprenant une fixation dudit au moins un premier organe (110) audit au moins un deuxième organe (120) et/ou dudit au moins un deuxième organe (120) audit au moins un premier organe (110) après ledit ajustement d'une position.
